# FASCICULE DE BREVET EUROPEEN

(11) **EP 4 158 225 B1**
(45) Date de publication et mention de la délivrance du brevet: **21.10.2026**
(21) Numéro de dépôt: 21732444.1
(22) Date de dépôt: 10.05.2021
(51) Int. Cl.: F04B 1/122, F04B 1/0448, F16J 15/00

(54) **DISPOSITIF D'ÉTANCHÉITÉ AMÉLIORÉ POUR MACHINE HYDRAULIQUE**
VERBESSERTE DICHTUNGSVORRICHTUNG FÜR EINE HYDRAULISCHE MASCHINE
IMPROVED SEALING DEVICE FOR A HYDRAULIC MACHINE

(30) Priorité: 25.05.2020 FR 2005492
(43) Date de publication de la demande: 05.04.2023
(73) Titulaire: Poclain Hydraulics Industrie, 60410 Verberie (FR)
(72) Inventeur: ENGRAND, Julien, 60410 VERBERIE (FR); GRILLON, Gilles, 60410 VERBERIE (FR); QUERTELET, Stéphane, 60410 VERBERIE (FR)
(74) Mandataire: Cabinet Beau de Loménie
(86) Numéro de dépôt international: PCT/FR2021/050793
(87) Numéro de publication internationale: WO 2021/240090

(56) Documents cités:
- EP-A1- 1 679 458
- EP-A1- 3 480 458
- WO-A1-2019/043002
- US-A- 4 284 280

## Description

### Domaine Technique

Le présent exposé concerne un dispositif d'étanchéité amélioré pour une machine hydraulique, et plus précisément un dispositif de protection d'étanchéité contre des pics de pression.

### Technique antérieure

L'emploi de machines tournantes dans différents environnements pose des problématiques en termes d'étanchéité. En effet, une problématique récurrente est de prévenir l'admission d'impuretés dans un volume interne du carter de la machine tournante.

Différentes structures d'étanchéité ont été proposées afin d'assurer une bonne étanchéité entre le volume interne de la machine tournante et le milieu externe. Toutefois, les solutions connues demeurent problématiques en termes de fiabilité, notamment sur la durée.

Un premier montage consiste à placer un seul élément d'étanchéité assurant l'isolation entre le milieu ambiant et le volume interne du carter. Cependant, en cas d'élévation de pression dans le carter, l'élément d'étanchéité peut être expulsé de son logement, ou détruit, par exemple par déchirure ou par grippage des surfaces en contact glissant pour le cas d'étanchéité métalliques car la force d'appui entre deux parties glissantes augmente. Il s'en suit un frottement élevé et une perte de rendement dans le cas des joints métalliques. De telles élévations de pression de carter sont dues, par exemple à la mise en route d'une machine hydraulique froide. De l'huile sous pression arrive dans le carter de la machine, par les fuites internes habituelles dans ces machines, tandis que l'huile de carter ne peut s'échapper facilement par le tuyau de drain de carter qui est encore rempli d'huile froide et donc générant des pertes de charge très élevées du fait de la viscosité élevée de l'huile froide. De tels fonctionnements détruisent rapidement l'élément d'étanchéité. En particulier, si la pression s'élève dans le carter de la machine, la force d'appui entre des parties glissantes de l'élément d'étanchéité augmente, et il peut s'en suivre un grippage ou une extrusion en cas d'élément d'étanchéité souple, qui détruit l'élément d'étanchéité. Les composants de l'élément d'étanchéité peuvent également être détruits par la pression.

D'une manière alternative, les éléments d'étanchéité anti pollution assurant l'isolation entre le milieu ambiant et le volume interne du carter peuvent être disposés dans des logements dédiés, ces logements étant eux-mêmes isolés du volume interne du carter comprenant la machine tournante, par exemple une machine hydraulique, par une étanchéité de carter communément qualifiée d'étanchéité absolue, associant un élément d'étanchéité dynamique tel qu'une bague à lèvre avec un élément d'étanchéité dynamique résistant à d'éventuels pics de pression, par exemple un joint torique couplé à un élément annulaire. Cependant, un tel montage définit ainsi une chambre fermée entre les éléments d'étanchéité axiaux et les éléments d'étanchéité de carter. Or, une telle chambre fermée pose une problématique en termes de lubrification. En effet, le logement comprenant les éléments d'étanchéité axiaux étant totalement isolé du volume interne du carter par l'étanchéité de carter, ce logement n'est pas lubrifié en continu notamment en cas de perde du lubrifiant au cours du temps, ou de dégradation de ses caractéristiques. Or, un défaut de lubrification peut entrainer une destruction rapide des éléments d'étanchéité, notamment sous l'effet d'un grippage ou d'une extrusion par manque d'huile. Les solutions communément proposées consistent à insérer un volume d'huile prédéterminé dans ce logement, ce volume d'huile devant nécessairement être remplacé à intervalle régulier. Le logement doit aussi présenter un volume suffisant ce qui rend la machine hydraulique moins compacte. On comprend cependant que de telles solutions sont fortement contraignantes et nécessitent des opérations de maintenance dédiées. Le document EP 3 480 458 A1 divulgue une machine hydraulique selon le préambule de la revendication 1.

Le présent exposé vise ainsi à répondre au moins partiellement à ces problématiques.

### Exposé de l'invention

A cet effet, le présent exposé concerne une machine hydraulique comprenant un premier ensemble et un second ensemble mobiles en rotation l'un par rapport à l'autre selon un axe de rotation, ladite machine hydraulique comprenant un carter définissant un volume interne,
dans laquelle une interface entre l'ensemble fixe et l'ensemble mobile comprend un logement muni d'un premier élément d'étanchéité assurant l'étanchéité du volume interne vis-à-vis du milieu externe,
caractérisée en ce qu'un second élément d'étanchéité est positionné entre le volume interne et le logement, ledit second élément d'étanchéité étant adapté pour permettre un passage de fluide depuis le volume interne vers le logement lorsque l'écart de pression entre le volume interne et le logement est inférieur ou égal à une valeur seuil de pression, et pour interdire un passage de fluide depuis le volume interne vers le logement lorsque l'écart de pression entre le volume interne et le logement est supérieur à ladite valeur seuil de pression.

Selon un exemple, le second élément d'étanchéité comprend un passage adapté pour se fermer lorsque la pression dans le volume interne ou dans le logement dépasse une valeur seuil, ou par exemple lorsque la différence de pression entre le volume interne et le logement dépasse une valeur seuil, typiquement 0,1, 0,2 ou 0,5 bar.

Selon un exemple, le premier élément d'étanchéité est un joint d'étanchéité axial comprenant un premier anneau métallique, un second anneau métallique, un premier anneau en élastomère et un second anneau en élastomère, le premier anneau métallique et le second anneau métalliques étant montés en appui l'un contre l'autre selon une direction axiale définie par l'axe de rotation, le premier anneau en élastomère étant interposé entre le premier anneau métallique et une paroi du premier ensemble, et le second anneau en élastomère étant interposé entre le second anneau métallique et une paroi du second ensemble.

Selon un exemple, le second élément d'étanchéité comprend un joint torique.

Le second élément d'étanchéité comprend alors typiquement une bague sur laquelle est monté le joint torique.

La bague comprend alors typiquement un perçage, adapté pour permettre un passage de fluide lorsque l'écart de pression entre le volume interne et le logement e est inférieur ou égal à ladite valeur seuil de pression, et ne pas permettre un passage de fluide lorsque l'écart de pression entre le volume interne et le logement est supérieur à ladite valeur seuil de pression.

Selon un exemple, le second élément d'étanchéité est positionné entre deux éléments de roulement assurant le mouvement de rotation relatif entre le premier ensemble et le second ensemble.

Selon un exemple, le second élément d'étanchéité est réalisé en une seule pièce.

Selon un exemple, le second élément d'étanchéité est adapté pour, lorsque l'écart de pression entre le volume interne et le logement est inférieur ou égal à la valeur seuil de pression, permettre un passage de fluide depuis le logement vers le volume interne, et lorsque l'écart de pression entre le volume interne et le logement est supérieur à la valeur seuil de pression, isoler le logement du volume interne.

Selon un exemple, le second élément d'étanchéité est interposé entre deux surfaces se faisant face selon la direction axiale définie par l'axe de rotation.

Selon un exemple, le second élément d'étanchéité est interposé entre deux surfaces se faisant face selon la direction radiale par rapport à l'axe de rotation.

Selon un exemple, la valeur seuil de pression est égale à 0,5 bar, ou à 0,2 bar, ou encore à 0,1 bar.

La machine hydraulique est par exemple une machine comprenant un bloc cylindres muni d'une pluralité de logement s'étendant radialement par rapport à l'axe de rotation dans lesquels sont disposés des cylindres, et une came multilobes entourant le bloc cylindres.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente une vue d'ensemble d'un exemple de machine hydraulique selon un aspect de l'invention.
[Fig. 2] La figure 2 présente un exemple de machine hydraulique selon un aspect de l'invention.
[Fig. 3] La figure 3 est une vue détaillée d'un élément d'étanchéité selon un aspect de l'invention.
[Fig. 4] La figure 4 est une vue détaillée d'un élément d'étanchéité selon un aspect de l'invention.
[Fig. 5] La figure 5 est une vue détaillée d'un élément d'étanchéité selon un aspect de l'invention.
[Fig. 6] La figure 6 présente un exemple de machine hydraulique selon un aspect de l'invention.
[Fig. 7] La figure 7 présente un exemple de machine hydraulique selon un aspect de l'invention.

Sur l'ensemble des figures, les éléments en commun sont repérés par des références numériques identiques.

### Description des modes de réalisation

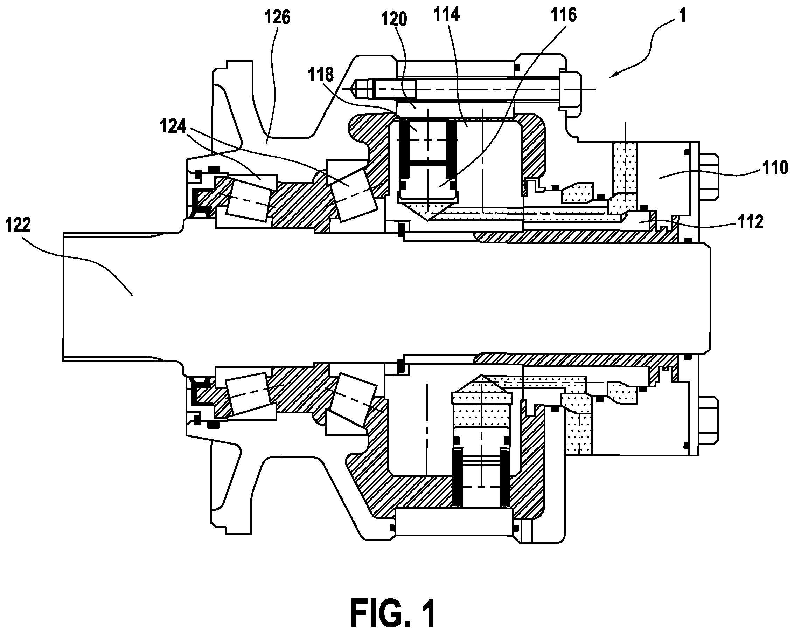

On décrit ci-après un exemple de réalisation de l'invention en référence aux figures 1 à 5.

On représente sur la figure 1 une vue en coupe d'une machine hydraulique 1, typiquement une machine hydraulique à pistons radiaux et came multilobes. Par machine hydraulique, on désigne typiquement un moteur hydraulique ou une pompe hydraulique, ces appareils présentant typiquement un fonctionnement réversible. La machine hydraulique 1 comprend un couvercle distributeur 110, un distributeur 112 d'alimentation, un ensemble que l'on désigne communément sous l'appellation d'hydrocouple comportant un bloc cylindre 114 et des pistons 116 équipés d'un galet 118 de roulement, et une came 120 multilobe, un arbre 122 et un palier 124 constitué d'une ensemble de roulements, et un couvercle de palier 126. L'arbre 122 est relié mécaniquement au bloc cylindre 114 pour transmettre un mouvement de rotation résultant d'un couple appliqué à l'arbre 122 ou d'un coulissement des pistons 116 au contact de la came 120 multilobes. Le couvercle de distributeur 110 comporte des conduits d'alimentation pour l'aspiration et le refoulement de la machine hydraulique 1. Les conduits d'aspiration et de refoulement, les conduits du distributeur et les chambres à piston du bloc cylindres sont reliées à un circuit hydraulique de puissance, qui transmet la puissance motrice hydraulique. Par exemple, ils sont reliés aux branches aller et retour, ou branche haute pression HP et basse pression BP d'un circuit hydraulique en boucle fermée, ou bien à l'alimentation par une pompe de puissance et au retour vers un réservoir pour un circuit hydraulique en boucle ouverte. Dans l'exemple illustré, le couvercle distributeur 110, la came 120 et le couvercle de palier 126 définissent un carter de la machine hydraulique 1.

Le volume contenu dans le carter autour des différents éléments précités représente le volume interne de la machine hydraulique 1. On le représente par des hachures sur la figure 1. Il est isolé du circuit hydraulique de puissance (représenté par des pointillés) par les étanchéités des pistons 116 et du distributeur 112 d'une manière connue de l'homme de l'art. Le volume interne de la machine hydraulique 1 reçoit un débit d'huile provenant des fuites internes de la machine hydraulique 1 en provenance du circuit de puissance, et il est typiquement raccordé par un drain à un réservoir pour évacuer ce débit d'huile, de manière à ce que la pression dans le volume interne de la machine hydraulique 1 reste sensiblement égale à la pression dudit réservoir, qui est typiquement égale à ou proche de la pression atmosphérique.

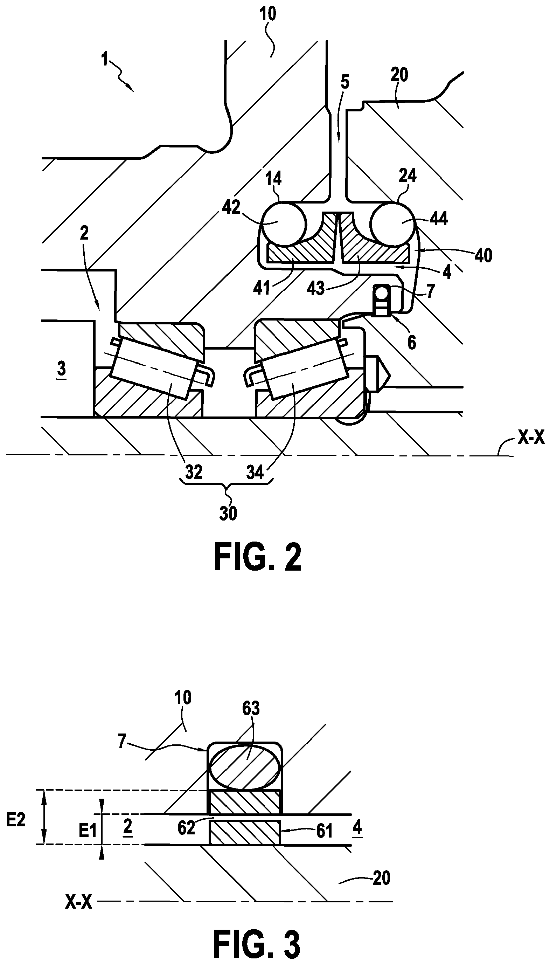

On représente sur la figure 2 une vue partielle en coupe d'une machine hydraulique 1. La machine hydraulique 1 comprend un premier ensemble 10 et un second ensemble 20 mobiles en rotation l'un par rapport à l'autre selon un axe de rotation X-X. Dans la description qui suit, les désignations « radiale » et « axiale » sont définies par rapport à l'axe de rotation X-X sauf mention contraire.

Dans l'exemple illustré, le mouvement de rotation est assuré par des éléments de roulement, ici des roulements coniques 32 et 34 formant un palier 30. La machine hydraulique 1 comprend un volume interne 2 dans lequel sont disposé différents composants 3 de la machine hydraulique en fonction de sa nature, par exemple un moteur hydraulique à pistons radiaux ou à pistons axiaux, une pompe hydraulique à pistons radiaux ou à pistons axiaux, un système de freinage, ou tout autre appareil.

Le premier ensemble 10 et le second ensemble 20 désignent les différents composants de la machine hydraulique. A titre d'exemple, l'un de ces ensembles peut comprendre un arbre, un bloc cylindres et un distributeur d'une machine hydraulique, tandis que l'autre de ces ensembles peut comprendre une came multilobes. Le premier ensemble 10 et le second ensemble 20 peuvent comprendre des moyens de freinage, par exemple des disques adaptés pour prévenir le mouvement en rotation relatif du premier ensemble 10 par rapport au second ensemble 20 sous l'effet de frottements entre lesdits disques.

Le volume interne 2 de la machine hydraulique est isolé du milieu externe via un premier élément d'étanchéité 40 disposé dans un logement 4. Le logement 4 est relié au milieu externe via un conduit 5, formé par un écart entre le premier ensemble 10 et le second ensemble 20. Dans l'exemple illustré, le premier élément d'étanchéité 40 est un joint axial, ou joint à glace, communément désigné par l'appellation joint duo-cône.

Le premier élément d'étanchéité 40 comprend ici un premier anneau métallique 41 et un second anneau métallique 43, réalisés en matériau métallique, et qui sont typiquement symétriques par rapport à un plan s'étendant radialement par rapport à l'axe de rotation X-X. Le premier élément d'étanchéité 40 comprend également un premier anneau en élastomère 42 et un second anneau en élastomère 44, réalisés en matériau élastomère.

Le premier anneau métallique 41 et le second anneau métallique 43 sont en appui l'un contre l'autre selon la direction axiale définie par l'axe de rotation X-X.

Le premier anneau en élastomère 42 est monté en appui contre le premier anneau métallique 41 d'une part, et contre une cloison 14 du premier ensemble 10.

Le second anneau en élastomère 44 est monté en appui contre le second anneau métallique 43 d'une part, et contre une cloison 24 du second ensemble 20.

Le premier anneau en élastomère 42 et le second anneau en élastomère 44 sont typiquement positionnés radialement à l'extérieur par rapport au premier anneau métallique 41 et au second anneau métallique 43. Le premier anneau métallique 41 et le second anneau métallique 43 viennent comprimer le premier anneau en élastomère 42 et le second anneau en élastomère 44 contre les cloisons 14 et 24 respectivement du premier ensemble 10 et du second ensemble 20, et ainsi assurer une liaison étanche.

Le premier anneau métallique 41, le second anneau métallique 43 ainsi que les cloisons 14 et 24 respectivement du premier ensemble 10 et du second ensemble 20 sont typiquement formés de manière à ce que le premier anneau en élastomère 42 et le second anneau en élastomère 44 tendent à déplacer le premier anneau métallique 41 et le second anneau métallique 43 l'un contre l'autre selon la direction axiale définie par l'axe de rotation X-X.

Comme indiqué précédemment, une problématique de ce type de montage concerne la lubrification du premier élément d'étanchéité 40. En effet, dans les structures conventionnelles, le logement 4 est typiquement isolé du volume interne du carter 1 par une étanchéité qualifiée d'absolue, qui comprend communément un joint d'étanchéité dynamique couplé à une étanchéité renforcée adaptée notamment pour supporter d'éventuels pics de pression, par exemple une bague à lèvre. Cependant, un tel montage isole totalement le logement 4 du volume interne du carter 1, ce qui nécessite donc de prévoir une lubrification dès la conception, par exemple en insérant une quantité prédéterminée d'huile dans le logement 4. Cependant, cela impose des opérations de maintenance régulière afin de réintroduire de l'huile dans le logement 4, dans la mesure où l'huile s'échappe au fur et à mesure vers le milieu extérieur. En outre, de telles structures posent une problématique en cas de pic de pression dans le volume interne du carter 1, qui peut alors entrainer une destruction de l'élément d'étanchéité positionné dans le logement 4.

La structure proposée dans le présent exposé propose de positionner non pas une étanchéité absolue entre le volume interne 2 et le logement 4, mais un second élément d'étanchéité 6. Le second élément d'étanchéité 6 proposé étant adapté pour permettre un passage de fluide depuis le volume interne 2 vers le logement 4 lorsque la pression dans le volume interne 2 est inférieure ou égale à une valeur seuil de pression, et à isoler le logement 4 du volume interne 2 lorsque l'écart de pression entre le volume interne 2 et le logement 4 est supérieur à ladite valeur seuil de pression, et ainsi ne pas permettre un passage de fluide depuis le volume interne 2 vers le logement 4 lorsque l'écart de pression entre le volume interne 2 et le logement 4 est supérieur à ladite valeur seuil de pression. Le second élément d'étanchéité 6 présente ainsi une fonction de clapet taré, ou de gicleur à deux sens de flux.

Le passage dans le second élément d'étanchéité peut également fonctionner en sens inverse, ce qui permet un passage d'huile du logement vers le volume interne lorsque la pression s'élève dans le volume interne, en particulier en cas d'échauffement. Un tel fonctionnement dans les deux sens de flux n'est pas préjudiciable pour la lubrification du logement 4.

Le second élément d'étanchéité 6 permet ainsi de réaliser un écoulement calibré d'huile depuis le volume interne 2 vers le logement 4 lorsque l'écart de pression entre le volume interne 2 et le logement 4 est inférieur ou égal à une valeur seuil de pression prédéterminée. Le second élément d'étanchéité 6 présente ainsi typiquement un passage, permettant une circulation de fluide entre le volume interne 2 et le logement 4 tant que la pression est inférieure ou égale à une valeur seuil de pression, et venant se fermer lorsque l'écart de pression entre le logement 4 et le volume interne 2 dépasse la valeur seuil de pression, isolant alors le volume interne 2 du logement 4. Plus généralement, le second élément d'étanchéité 6 est calibré de manière à ce que le débit de fluide pouvant passer dans le logement 4 n'entraine pas une montée en pression trop importante dans le logement 4. Selon un exemple, le second élément d'étanchéité peut être calibré de manière à permettre une montée en pression de l'ordre de 0,2 bar dans le logement 4, le faisant passer une pression de 3 bar à une pression de 3,2 bar, dans le cas où 3 bar est la valeur de pression dans le logement 4 et dans le volume interne 2 avant un pic de pression dans le volume interne 2.

Cette fonction permet ainsi d'assurer une lubrification continue du logement 4, tout en protégeant le premier élément d'étanchéité 40 contre des pics de pression au sein du volume interne 2. En effet, en cas de pic de pression au sein du volume interne 2, le second élément d'étanchéité 6 n'est pas passant, et se comporte alors comme une étanchéité absolue, empêchant une pression trop élevée d'atteindre le logement 4, ce qui pourrait provoquer une dégradation du premier élément d'étanchéité 40.

La valeur seuil de pression est par exemple comprise entre 2,5 et 3,5 bar, ou plus précisément entre 3 et 3,2 bar. Plus généralement, le fonctionnement en mode passant ou non peut dépendre d'une différence de pression de part et d'autre du second élément d'étanchéité 6, par exemple lorsque la différence de pression est supérieure ou égale à 0,5 bar, ou supérieure ou égale à 0,2 bar, ou encore supérieure ou égale à 0,1 bar.

Dans le sens inverse, lorsque la pression dans le volume interne 2 n'excède pas la valeur seuil de pression, le second élément d'étanchéité 6 permet un passage de fluide. Lorsqu'un échauffement se produit dans le logement 4, cette élévation de pression est lente, et de l'huile s'écoule vers le volume interne 2 avant qu'un pic de pression ne soit créé. De cette manière, la pression dans le logement 4 ne dépasse pas la pression du volume interne 2 tant que celle-ci est inférieure au seuil de pression. Il n'y a pas de possibilité de montée en pression du logement 4 par lui-même. Le risque de destruction du premier élément d'étanchéité 40 ou d'éjection d'huile par montée de pression dans le logement 4 est également supprimé.

Le second élément d'étanchéité 6 peut par exemple être positionné entre deux éléments de roulement formant un palier de roulement 30 de la machine hydraulique 1, entre le palier de roulement 30 et le logement 4, ou entre le volume interne 2 et le palier de roulement 30.

On décrit à présent des exemples de réalisation du second élément d'étanchéité 6 en référence aux figures 3, 4 et 5. Les deux fonctions du second élément d'étanchéité 6, à savoir une fonction d'étanchéité et une fonction de passage de fluide sont ici réalisées par les mêmes pièces.

On représente sur ces figures le second élément d'étanchéité 6, qui est ici composé d'une bague 61 et d'un joint torique 63. Le second élément d'étanchéité 6 est positionné dans une gorge 7 formée à une interface entre le premier ensemble 10 et le second ensemble 20. La gorge 7 peut s'étendre radialement ou axialement par rapport à l'axe de rotation X-X. Les exemples illustrés sur les figures 3, 4 et 5 représentent des gorges s'étendant radialement par rapport à l'axe de rotation X-X. On comprend cependant que le fonctionnement pour une gorge axiale est similaire. On présentera par la suite une structure ayant une gorge axiale. La gorge 7 est interposée entre le volume interne 2 et le logement 4.

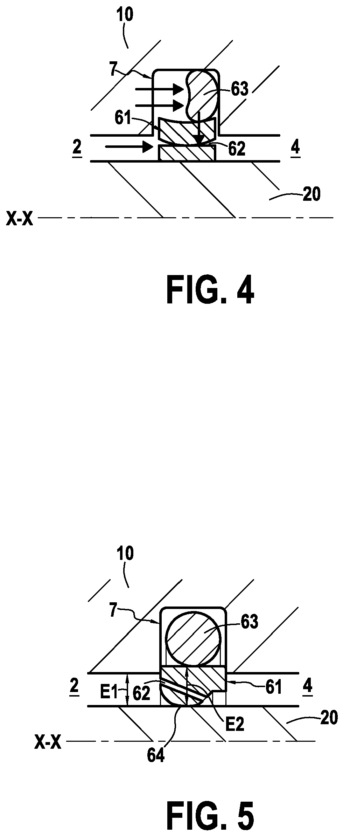

La bague 61 forme typiquement un anneau autour de l'axe de rotation X-X. Elle peut avoir une section rectangulaire (comme visible sur la figure 3), ou présenter une section rectangulaire avec une protubérance 64 adaptée pour venir au contact d'une paroi du premier ensemble 10 ou du second ensemble 20 (comme visible sur la figure 5). Un ou plusieurs perçages 62 sont réalisés dans la bague 61, ces perçages 62 étant adaptés pour permettre un passage de fluide au travers de la bague 61, et forment donc le passage mentionné précédemment pour le second élément d'étanchéité 6.

La bague 61 présente une épaisseur strictement supérieure à l'espacement entre le premier ensemble 10 et le second ensemble 20 autour de la gorge 7, selon la direction axiale ou selon la direction radiale en fonction de l'orientation de la gorge 7.

Dans l'exemple illustré, le premier ensemble 10 et le second ensemble 20 sont espacés d'un écart E1 de part et d'autre de la gorge 7, radialement par rapport à l'axe de rotation X-X. La bague 61 présente ainsi une épaisseur E2 selon la direction radiale, strictement supérieure à E1, de sorte que la bague 61 ne puisse pas sortir de la gorge 7. La gorge 7 présente quant à elle une dimension radiale strictement supérieure à E2, de manière à permettre d'y loger la bague 61 et le joint torique 63.

Le joint torique 63 peut présenter une section circulaire, ovale, ou quelconque. Dans les exemples représentés sur les figures 3, 4 et 5, le joint torique 63 a une section circulaire, et est positionné autour de la bague 61, c'est-à-dire qu'il est au contact de la bague 61 et vient l'entourer par l'extérieur, radialement par rapport à l'axe de rotation X-X.

La figure 4 illustre l'effet d'un pic de pression dans le volume interne 2.

On schématise par des flèches l'effet du pic de pression sur les différents éléments du second élément d'étanchéité 6. Comme on le voit sur cette figure, le joint torique 63 est alors plaqué contre une paroi axiale de la gorge 7, ici la paroi de la gorge 7 opposée au volume interne 2. La montée en pression au sein de la gorge 7 entraine également un écrasement de la bague 61 sous l'effet de la pression et sous l'effet du joint torique 63 qui vient comprimer la bague 61.

Cet écrasement de la bague 61 entraine une déformation de la bague 61 qui obture ainsi les perçages 62 lorsque la pression est supérieure à la valeur seuil de pression, ce qui vient donc empêcher un passage de fluide au travers du second élément d'étanchéité 6.

On comprend également que le fonctionnement est réversible ; une fonction identique est réalisée en cas de montée en pression dans le logement 4 par rapport au volume interne 2. Le second élément d'étanchéité 6 est alors est adapté pour, lorsque la pression dans le logement 4 est inférieure ou égal à la valeur seuil de pression (ou lorsque la différence de pression entre le logement 4 et le volume interne 2 dépasse une valeur seuil), permettre un passage de fluide depuis le logement 4 vers le volume interne 2, et lorsque la pression dans le logement 4 est supérieure à la valeur seuil de pression, isoler le logement 4 du volume interne 2, ce qui permet d'empêcher la pénétration d'impuretés dans le volume interne 2.

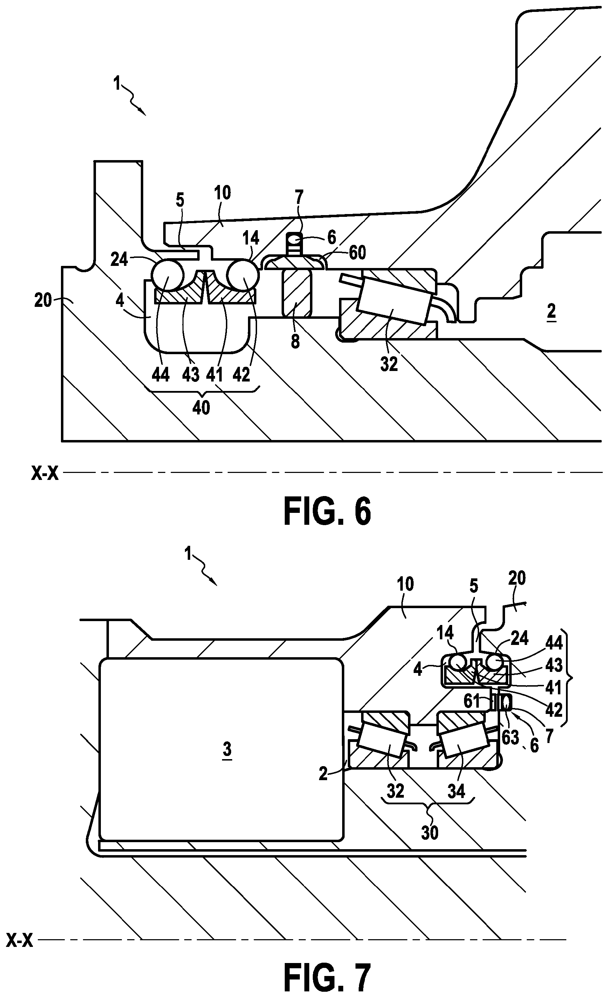

La figure 6 présente une variante du mode de réalisation déjà décrit en référence à la figure 2. L'étanchéité entre le premier ensemble 10 et le second ensemble 20 est assurée par une étanchéité absolue et par un second élément d'étanchéité 6 tel que défini précédemment.

Dans cet exemple de réalisation, une étanchéité absolue 8 est formée entre le logement 4 et le volume interne 2, à l'interface entre le premier ensemble 10 et le second ensemble 20. Cette étanchéité absolue 8 isole le logement 4 du volume interne 2, et empêche tout passage de fluide entre ces deux volumes au travers de cette étanchéité.

Le second élément d'étanchéité 6 est positionné dans un conduit de dérivation 60 formé dans le premier ensemble 10 ou dans le second ensemble 20, et permet ainsi d'assurer un passage de fluide à la manière d'un clapet taré ou d'un gicleur à deux sens de flux comme déjà décrit précédemment.

Le fonctionnement est identique au fonctionnement déjà décrit en référence aux figures 2 à 5.

Le conduit de dérivation 60 peut par exemple être formé de perçages débouchant sur une valve formant un clapet taré externe ou un gicleur à deux sens de flux externe, par exemple une valve métallique avec 2 tubes, qui constitue ici le second élément d'étanchéité 6.

La figure 7 présente une variante du mode de réalisation déjà décrit en référence à la figure 2.

Dans ce mode de réalisation, la gorge 7 est formée selon la direction axiale de l'axe de rotation X-X.

Le second élément d'étanchéité 6 s'étend ainsi selon la direction axiale, et non pas selon la direction radiale. En considérant un second élément d'étanchéité 6 comprenant une bague 61 et un joint torique 63 tel que décrits précédemment, la bague 61 et le joint torique 63 sont alors superposés selon la direction axiale.

Le fonctionnement est identique au fonctionnement déjà décrit en référence aux figures 2 à 5.

La structure telle que proposée permet ainsi de protéger les étanchéités des machines tournantes réalisant l'isolation d'un volume interne par rapport au milieu ambiant des montées en pression au sein du volume interne, mais aussi des manques de lubrification dans le logement, et des montées en pression dans le logement par échauffement. Le logement peut ainsi être réduit car il n'a plus à remplir une fonction de stockage et de réserve d'huile dans la mesure où la lubrification du premier élément d'étanchéité 40 est assurée avec de l'huile provenant du volume interne de la machine hydraulique. La machine hydraulique est plus fiable, moins encombrante, et ne nécessite plus d'entretien de maintenance spécifique de l'huile du logement.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Machine hydraulique (1) comprenant un premier ensemble (10) et un second ensemble (20) mobiles en rotation l'un par rapport à l'autre selon un axe de rotation (X-X), ladite machine hydraulique (1) comprenant un carter définissant un volume interne (2),
dans laquelle une interface entre l'ensemble fixe et l'ensemble mobile comprend un logement (4) muni d'un premier élément d'étanchéité (40) dynamique assurant l'étanchéité du volume interne (2) vis-à-vis du milieu externe,
**caractérisée en ce qu'**un second élément d'étanchéité (6) dynamique est positionné à une interface entre l'ensemble fixe et l'ensemble mobile, entre le volume interne (2) et le logement (4), ledit second élément d'étanchéité (6) étant adapté pour permettre un passage d'huile depuis le volume interne (2) vers le logement (4) lorsque l'écart de pression entre le volume interne (2) et le logement (4) est inférieur à une valeur seuil de pression de manière à permettre une lubrification du premier élément d'étanchéité (40) par un fluide provenant du volume interne, et pour ne pas permettre un passage d'huile depuis le volume interne (2) vers le logement (4) lorsque l'écart de pression entre le volume interne (2) et le logement (4) est supérieur à ladite valeur seuil de pression.

2. Machine hydraulique (1) selon la revendication 1, dans laquelle le second élément d'étanchéité (6) comprend un passage adapté pour se fermer lorsque l'écart de pression entre le volume interne (2) et le logement (4) dépasse la valeur seuil.

3. Machine hydraulique (1) selon l'une des revendications 1 ou 2, dans laquelle le premier élément d'étanchéité (40) est un joint d'étanchéité axial comprenant un premier anneau métallique (41), un second anneau métallique (43), un premier anneau (42) en élastomère et un second anneau en élastomère (44), le premier anneau métallique (41) et le second anneau métalliques (43) étant montés en appui l'un contre l'autre selon une direction axiale définie par l'axe de rotation (X-X), le premier anneau en élastomère (42) étant interposé entre le premier anneau métallique (41) et une paroi (14) du premier ensemble, et le second anneau en élastomère (44) étant interposé entre le second anneau métallique (43) et une paroi (24) du second ensemble (20).

4. Machine hydraulique (1) selon l'une des revendications 1 à 3, dans laquelle le second élément d'étanchéité (6) comprend un joint torique (63).

5. Machine hydraulique selon la revendication 4, dans laquelle le second élément d'étanchéité (6) comprend une bague (61) sur laquelle est monté le joint torique (63).

6. Machine hydraulique (1) selon la revendication 5, dans laquelle la bague (61) comprend un perçage (62), adapté pour permettre un passage d'huile lorsque l'écart de pression entre le volume interne (2) et le logement (4) est inférieur ou égal à la valeur seuil de pression, et ne pas permettre un passage d'huile l'écart de pression entre le volume interne (2) et le logement (4) dépasse la valeur seuil.

7. Machine hydraulique (1) selon l'une des revendications 1 à 6, dans lequel le second élément d'étanchéité (6) est positionné entre deux éléments de roulement (32, 34) assurant le mouvement de rotation relatif entre le premier ensemble (10) et le second ensemble (20).

8. Machine hydraulique (1) selon l'une des revendications 1 à 7, dans laquelle le second élément d'étanchéité (6) est réalisé en une seule pièce.

9. Machine hydraulique (1) selon l'une des revendications 1 à 8, dans laquelle le second élément d'étanchéité (6) est adapté pour, lorsque l'écart de pression entre le volume interne (2) et le logement (4) est inférieur ou égal à la valeur seuil de pression, permettre un passage d'huile depuis le logement (4) vers le volume interne (2), et lorsque l'écart de pression entre le volume interne (2) et le logement (4) est supérieur à la valeur seuil de pression, isoler le logement (4) du volume interne (2).

10. Machine hydraulique (1) selon l'une des revendications 1 à 9, dans lequel le second élément d'étanchéité (6) est interposé entre deux surfaces se faisant face selon la direction axiale définie par l'axe de rotation (X-X).

11. Machine hydraulique (1) selon l'une des revendications 1 à 10, dans lequel le second élément d'étanchéité (6) est interposé entre deux surfaces se faisant face selon la direction radiale par rapport à l'axe de rotation (X-X).

12. Machine hydraulique (1) selon l'une des revendications 1 à 11, dans laquelle la valeur seuil de pression est égale à 0,5 bar, ou plus précisément à 0,2 bar.

13. Machine hydraulique (1) selon l'une des revendications précédentes, comprenant un bloc cylindres muni d'une pluralité de logement s'étendant radialement par rapport à l'axe de rotation (X-X) dans lesquels sont disposés des cylindres, et une came multilobes entourant le bloc cylindres.

## Patentansprüche

1. Hydraulische Maschine (1), umfassend eine erste Baugruppe (10) und eine zweite Baugruppe (20), die relativ zueinander um eine Drehachse (X-X) rotatorisch beweglich sind, wobei die hydraulische Maschine (1) ein Gehäuse umfasst, das ein Innenvolumen (2) begrenzt,
wobei eine Schnittstelle zwischen der feststehenden Baugruppe und der beweglichen Baugruppe eine Aufnahme (4) umfasst, die mit einem ersten dynamischen Dichtungselement (40) versehen ist, welches die Abdichtung des Innenvolumens (2) gegenüber der Außenumgebung gewährleistet,
**dadurch gekennzeichnet, dass** ein zweites dynamisches Dichtungselement (6) an einer Schnittstelle zwischen der feststehenden Baugruppe und der beweglichen Baugruppe, zwischen dem Innenvolumen (2) und der Aufnahme (4), positioniert ist, wobei das zweite Dichtungselement (6) geeignet ist, einen Öldurchfluss von dem Innenvolumen (2) zu der Aufnahme (4) zu ermöglichen, wenn die Druckdifferenz zwischen dem Innenvolumen (2) und der Aufnahme (4) derart unter einem Druckschwellenwert liegt, dass eine Schmierung des ersten Dichtungselements (40) durch ein aus dem Innenvolumen stammenden Fluid ermöglicht wird, und keinen Öldurchfluss von dem Innenvolumen (2) zu der Aufnahme (4) ermöglicht wird, wenn die Druckdifferenz zwischen dem Innenvolumen (2) und der Aufnahme (4) über dem Druckschwellenwert liegt.

2. Hydraulische Maschine (1) nach Anspruch 1, wobei das zweite Dichtungselement (6) einen Durchgang umfasst, der geeignet ist, sich zu schließen, wenn die Druckdifferenz zwischen dem Innenvolumen (2) und der Aufnahme (4) den Schwellenwert überschreitet.

3. Hydraulische Maschine (1) nach einem der Ansprüche 1 oder 2, wobei das erste Dichtungselement (40) eine Axialdichtung ist, die einen ersten Metallring (41), einen zweiten Metallring (43), einen ersten Elastomerring (42) und einen zweiten Elastomerring (44) umfasst, wobei der erste Metallring (41) und der zweite Metallring (43) in einer durch die Drehachse (X-X) definierten axialen Richtung aneinander anliegend angebracht sind, wobei der erste Elastomerring (42) zwischen dem ersten Metallring (41) und einer Wand (14) der ersten Baugruppe angeordnet ist und der zweite Elastomerring (44) zwischen dem zweiten Metallring (43) und einer Wand (24) der zweiten Baugruppe (20) angeordnet ist.

4. Hydraulische Maschine (1) nach einem der Ansprüche 1 bis 3, wobei das zweite Dichtungselement (6) einen O-Ring (63) umfasst.

5. Hydraulische Maschine nach Anspruch 4, wobei das zweite Dichtungselement (6) einen Ring (61) umfasst, auf dem der O-Ring (63) angebracht ist.

6. Hydraulische Maschine (1) nach Anspruch 5, wobei der Ring (61) eine Bohrung (62) umfasst, die geeignet ist, einen Öldurchfluss zu ermöglichen, wenn die Druckdifferenz zwischen dem Innenvolumen (2) und der Aufnahme (4) kleiner oder gleich dem Druckschwellenwert ist, und keinen Öldurchfluss zu ermöglichen, wenn die Druckdifferenz zwischen dem Innenvolumen (2) und der Aufnahme (4) den Druckschwellenwert überschreitet.

7. Hydraulische Maschine (1) nach einem der Ansprüche 1 bis 6, wobei das zweite Dichtungselement (6) zwischen zwei Wälzkörpern (32, 34) positioniert ist, welche die relative Drehbewegung zwischen der ersten Baugruppe (10) und der zweiten Baugruppe (20) gewährleisten.

8. Hydraulische Maschine (1) nach einem der Ansprüche 1 bis 7, wobei das zweite Dichtungselement (6) einteilig ausgebildet ist.

9. Hydraulische Maschine (1) nach einem der Ansprüche 1 bis 8, wobei das zweite Dichtungselement (6) geeignet ist, um, wenn die Druckdifferenz zwischen dem Innenvolumen (2) und der Aufnahme (4) kleiner oder gleich dem Druckschwellenwert ist, einen Öldurchfluss von der Aufnahme (4) zu dem Innenvolumen (2) zu ermöglichen, und, wenn die Druckdifferenz zwischen dem Innenvolumen (2) und der Aufnahme (4) über dem Druckschwellenwert liegt, die Aufnahme (4) von dem Innenvolumen (2) zu trennen.

10. Hydraulische Maschine (1) nach einem der Ansprüche 1 bis 9, wobei das zweite Dichtungselement (6) zwischen zwei Flächen angeordnet ist, die sich in der durch die Drehachse (X-X) definierten axialen Richtung gegenüberliegen.

11. Hydraulische Maschine (1) nach einem der Ansprüche 1 bis 10, wobei das zweite Dichtungselement (6) zwischen zwei Flächen angeordnet ist, die sich in der radialen Richtung relativ zu der Drehachse (X-X) gegenüberliegen.

12. Hydraulische Maschine (1) nach einem der Ansprüche 1 bis 11, wobei der Druckschwellenwert 0,5 bar oder genauer 0,2 bar beträgt.

13. Hydraulische Maschine (1) nach einem der vorstehenden Ansprüche, umfassend einen Zylinderblock, der mit einer Vielzahl von sich relativ zu der Drehachse (X-X) radial erstreckenden Aufnahmen, in denen Zylinder angeordnet sind, ausgerüstet ist und einen den Zylinderblock umgebenden Mehrlappennocken.

## Claims

1. A hydraulic machine (1) comprising a first assembly (10) and a second assembly (20) movable in rotation relative to each other along an axis of rotation (X-X), said hydraulic machine (1) comprising a crankcase defining an internal volume (2),
wherein an interface between the fixed assembly and the movable assembly comprises a housing (4) provided with a first dynamic sealing element (40) ensuring the sealing of the internal volume (2) vis-à-vis the external environment,
**characterized in that** a second dynamic sealing element (6) is positioned at an interface between the fixed assembly and the movable assembly, between the internal volume (2) and the housing (4), said second sealing element (6) being adapted to allow a passage of oil from the internal volume (2) to the housing (4) when the pressure deviation between the internal volume (2) and the housing (4) is less than a pressure threshold value so as to allow lubrication of the first sealing element (40) by a fluid coming from the internal volume, and not to allow a passage of oil from the internal volume (2) to the housing (4) when the pressure deviation between the internal volume (2) and the housing (4) is greater than said pressure threshold value.

2. The hydraulic machine (1) according to claim 1, wherein the second sealing element (6) comprises a passage adapted to be closed when the pressure deviation between the internal volume (2) and the housing (4) exceeds the threshold value.

3. The hydraulic machine (1) according to any of claims 1 or 2, wherein the first sealing element (40) is an axial seal comprising a first metal annulus (41), a second metal annulus (43), a first elastomeric annulus (42) and a second elastomeric annulus (44), the first metal annulus (41) and the second metal annulus (43) being mounted bearing against each other along an axial direction defined by the axis of rotation (X-X), the first elastomeric annulus (42) being interposed between the first metal annulus (41) and a wall (14) of the first assembly, and the second elastomeric annulus (44) being interposed between the second metal annulus (43) and a wall (24) of the second assembly (20).

4. The hydraulic machine (1) according to any of claims 1 to 3, wherein the second sealing element (6) comprises an O-ring (63).

5. The hydraulic machine according to claim 4, wherein the second sealing element (6) comprises a ring (61) on which the O-ring (63) is mounted.

6. The hydraulic machine (1) according to claim 5, wherein the ring (61) comprises a bore (62), adapted to allow a passage of oil when the pressure deviation between the internal volume (2) and the housing (4) is less than or equal to the pressure threshold value, and not to allow a passage of oil when the pressure deviation between the internal volume (2) and the housing (4) exceeds the threshold value.

7. The hydraulic machine (1) according to any of claims 1 to 6, wherein the second sealing element (6) is positioned between two rolling elements (32, 34) ensuring the relative rotational movement between the first assembly (10) and the second assembly (20).

8. The hydraulic machine (1) according to any of claims 1 to 7, wherein the second sealing element (6) is made in one piece.

9. The hydraulic machine (1) according to any of claims 1 to 8, wherein the second sealing element (6) is adapted, when the pressure deviation between the internal volume (2) and the housing (4) is less than or equal to the pressure threshold value, to allow a passage of oil from the housing (4) to the internal volume (2), and when the pressure deviation between the internal volume (2) and the housing (4) is greater than the pressure threshold value, to isolate the housing (4) from the internal volume (2).

10. The hydraulic machine (1) according to any of claims 1 to 9, wherein the second sealing element (6) is interposed between two surfaces facing each other along the axial direction defined by the axis of rotation (X-X).

11. The hydraulic machine (1) according to any of claims 1 to 10, wherein the second sealing element (6) is interposed between two surfaces facing each other along the radial direction relative to the axis of rotation (X-X).

12. The hydraulic machine (1) according to any of claims 1 to 11, wherein the pressure threshold value is equal to 0.5 bar, or more specifically 0.2 bar.

13. The hydraulic machine (1) according to any of the preceding claims, comprising a cylinder block provided with a plurality of housings extending radially relative to the axis of rotation (X-X) in which cylinders are disposed, and a multi-lobe cam surrounding the cylinder block.
